# EUROPEAN PATENT SPECIFICATION

(11) **EP 2 205 395 B1**
(45) Date of publication and mention of the grant of the patent: **07.11.2012**
(21) Application number: 08829438.4
(22) Date of filing: 05.09.2008
(51) Int. Cl.: B23Q 5/58

(54) **POWER TOOL WITH A KICKBACK SENSOR ANT METHOD THEREFOR**
ELEKTROWERKZEUG MIT EINEM ANTIRÜCKSCHLAGSENSOR UND VERFAHREN DAFÜR
OUTIL MOTORISE AVEC CAPTEUR ANTI-RECUL ET PROCEDE POUR L'OUTIL

(30) Priority: 07.09.2007 US 970612 P; 04.09.2008 US 204229
(43) Date of publication of application: 14.07.2010
(73) Proprietor: Black & Decker, Inc., Newark, DE 19711 (US)
(72) Inventor: FORSTER, Michael, K., Towson, Maryland 21286 (US); WHEATON, Kyle, J., Towson, Maryland 21286 (US)
(74) Representative: Kavanagh, Benjamin
(86) International application number: PCT/US2008/010436
(87) International publication number: WO 2009/032314

(56) References cited:
- US-A- 4 249 117
- US-A- 4 249 117
- US-A- 4 307 325
- US-A- 4 317 176
- US-A- 4 317 176
- US-A1- 2005 217 874
- US-A1- 2005 217 874

## Description

The present disclosure relates to power tools, and more particularly to a switch for controlling the activation of an anti-lock or anti-kickback device configured on a power tool

Kickback is defined as that condition when the power driven tool or other implement abnormally and rapidly engages the workpiece in such a manner as to transfer at a high rate the power of the motive power source and/or the inertial energy of the power tool to the power tool or the workpiece or both resulting in an undesired and generally uncontrolled motion of the power tool or the workpiece or both. Kickback can be caused by a variety of factors including but not limited to sudden or excess force by the operator, non-uniform hardness or a defect in the workpiece, and where the workpiece is wood or other cellular material, the accumulation of moisture. In the case of a saw, the kerf may close and pinch the blade to cause a kickback, and in the case of a drill, kickback may occur when the bit breaks through the workpiece. Consider, for example, a portable circular saw of the type used on construction sites. Typically, plywood sheathing is first nailed to a framing structure, such as roofing trusses, and then the projecting ends of the plywood are sawed off evenly. If in this process a kickback were to occur due to the kerf closing as the ends of the wood sag under their own weight, the portable circular saw could kick out of the workpiece and fly back toward the operator, possibly resulting in serious bodily injury. On the other hand, in the case of a bench saw or a radial arm saw where the workpiece is fed into the saw blade, a kickback would result in the workpiece being driven back toward the operator at a high rate of speed, again with the possibility of serious bodily injury.

It will be understood by those familiar with the art that kickback is not a condition which is limited to circular saws but may be experienced with any power driven tool or machine tool system. For example, kickback may occur with portable, bench or stationary power drills, routers and shapers, portable and bench planers, abrasive wheel grinders, milling machines, reciprocating saws and the like. All of these tools are typically driven with electric motors, including universal, D.C., single phase or polyphase motors, but kickback is not a condition dependent on the motive power source but rather on the sudden abnormal engagement of the implement with the workpiece.

US 4 307 325 shows a control system for electric motors in power tools having a microcomputer programmed to detect an impending kickback condition and stop the motor. US 4 249 117 discloses measuring the rate of increase of current and comparing it to a threshold and generating a control signal if the threshold is exceeded to inhibit the coupling of power and/or to apply a brake to a power driven tool. US 2005/217874 discloses a method of operating a driving tool with a motor and an output member to adjust the rotational speed of the member to within a predetermined operating range. US 4 317 176 shows a microcomputer controlled power tool in which various operating conditions and parameters of the tool may be monitored and controlled.

A power tool according to the invention is defined in the appended claims. The tool includes a housing and a motor assembly in the housing. The motor assembly includes an output member and a motor for translating the output member. A kickback sensor can sample successive periods of current through the motor and produce an output in response thereto. An anti-kickback control device removes energy from the output member in response to the output of the kickback sensor. A switch has a first setting and a second setting. The first setting can correspond to a first operating condition of the anti-kickback control device. The second setting can correspond to a second operating condition of the anti-kickback control device.

According to additional features, the anti-kickback control device can include an "OFF" setting wherein the anti-kickback control device is turned off. The first operating condition can include a first threshold corresponding to a first rate of current change. The second operating condition can include a second threshold corresponding to a second rate of current change.

The power tool can further include a visual indicator. The anti-kickback control device can communicate a signal to the visual indicator based on the output of the kickback sensor. The switch can comprise a slidable switch configured on an upper portion of the housing. A reset switch can be in electrical communication with the anti-kickback control device. The reset switch can be operable to restart the power tool subsequent to a kickback condition being cleared.

The present teachings further provide a method of eliminating kickback in a power tool as defined in the claims. The power tool can be of the type having an output spindle driven by an electric motor, the electric motor being supplied with current from an AC source. Successive periods of current are sampled through the motor. A rate of change of the current is determined in response to the sampling. The rate of change is compared to a threshold. A selected position of a user actuated control switch having at least a first position and a second position is determined. Energy is removed from the output spindle in response to the comparison and the position of the user actuated control switch.

According to one example, removing the energy can include inhibiting the supply of current to the motor if the rate of change exceeds a threshold. The method can further illuminate a light source based on the rate of change comparison.

Further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
FIG. 1 is side view of an exemplary power tool constructed in accordance with the present invention and shown with a portion of the housing removed;
FIG. 2 is a system block diagram illustrating various components of the power tool of FIG. 1;
FIG. 3 is a detail view of a kickback control switch and visual indicator according to one example of the present invention; and
FIG. 4 is a flow diagram illustrating general operation of the power tool according to the present invention.

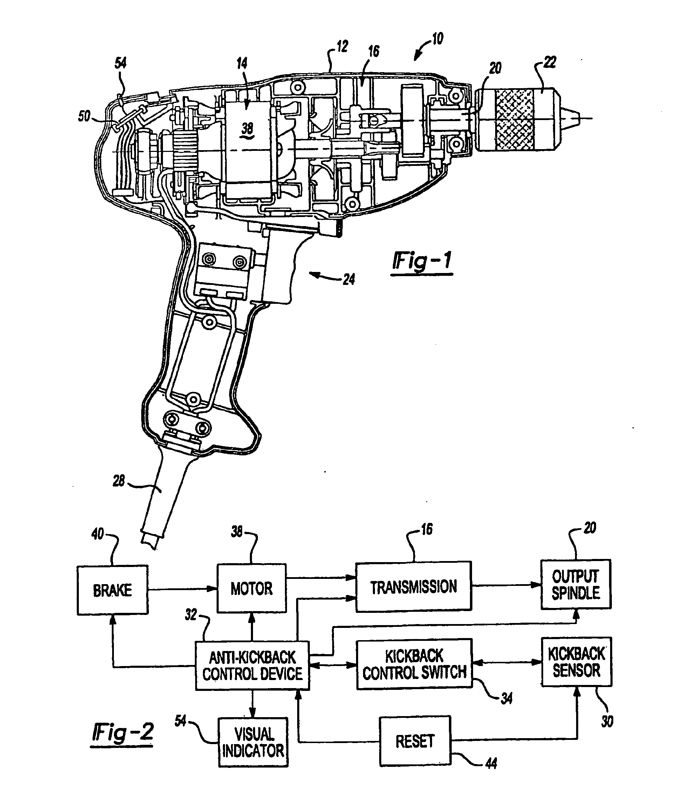

With reference to FIGS. 1 and 2 of the drawings, a power tool constructed in accordance with the present invention is generally indicated by reference numeral 10. As those skilled in the art will appreciate, the preferred embodiment of the present invention may be either a corded or cordless (battery operated) device, such as a portable screwdriver or drill. In the particular embodiment illustrated, the power tool 10 is a corded drill having a housing 12, a motor assembly 14, a transmission assembly 16, an output spindle 20, a chuck 22, a trigger assembly 24, and a power cord 28. The power tool 10 according to the present invention can also include a kickback sensor 30 (FIG. 2), an anti-lock or anti-kickback control device 32 (FIG. 2), and a kickback control switch 34. Those skilled in the art will understand that several of the components of power tool 10, such as the motor assembly 14, transmission 16, chuck 22, and trigger assembly 24, may be conventional in nature and need not be described in significant detail in this application. Reference may be made to a variety of publications for a more complete understanding of the operation of the conventional features of power tool 10.

In one example, the motor assembly 14 can include a motor 38 that is coupled to the output spindle 20 by way of the transmission 16. The transmission 16 may be simply a shaft providing direct drive from the motor 38 to the output spindle 20, a gear train providing speed increase or decrease, or any other coupling device. A brake 40 may be coupled to the motor 38 for decreasing rotational speed thereof. The power cord 28 can supply current from an AC source to the motor 38. For example, the brake 40 can me incorporated into the transmission 16. The kickback sensor 30 can derive motor current information from the motor 38. It is appreciated that shaft torque of the output spindle 20 can be measured indirectly by measuring the motor current. The rate of change of the motor current (dl/dt) can be computed and compared with a threshold value to detect an impending kickback condition. In one example, the anti-kickback control device 32 can differentiate the motor current with respect to time to obtain a measure of the increase or decrease in motor current. Digitally, the time rate of change can be approximated by periodically sampling the motor current and then making a computation among the different current readings. In other examples, the absolute current level can be measured and compared with a threshold value to detect an impending kickback condition.

It is appreciated that the anti-kickback control device 32 can determine whether a kickback condition exists by other methods. According to another example, the rate of change of motor speed (ds/dt) can be calculated and compared to a threshold. In another example, a percentage change in motor speed can be calculated and compared to a threshold. In another example, torque may be determined such as by a torque sensor (not shown) and compared to a threshold.

When an impending kickback condition is detected, the kickback sensor 30 can provide an output to the anti-kickback control device 32. The anti-kickback control device 32 can be responsive to the output of the kickback sensor 30 to remove energy from the output spindle 20. In one example, the motor 38 can be turned off. In another example, a clutch in the transmission 16 can be disengaged. In other examples, it may be necessary to additionally or alternatively apply the brake 40 to the motor 38 or the output spindle 20. In another example, the speed of the motor 38 can be controlled with combinations of open loop and closed loop speed control.

Once the kickback condition has been cleared, the tool 10 can be restarted by an output from a reset 44 to either or both of the kickback sensor 30 and the anti-kickback control device 32. In another example, reset can occur simply by first releasing the trigger 24 and subsequently depressing the trigger 24.

Those skilled in the art will understand that in the normal operation of the power tool 10, there will be an increase in motor current whenever a tool implement (i.e., a bit) engages a workpiece. This increase in current, however, will be within allowable and predictable limits. Even in the case of an overload condition, the increase in current is still much less in terms of the rate of change than that which occurs in a kickback condition just prior to lockup of the tool implement with the workpiece. In fact, in the overload condition, the power driven tool 10 or other implement continues to rotate, or cut the workpiece but at a slower speed, with the result that a thermal circuit breaker may be tripped. Neither of these conditions will occur in kickback. Kickback occurs in a such a short period of time that no significant heating takes place such that a thermal relay would trip. The threshold value should be set at a level which will permit detection of a kickback condition in a sufficiently short period of time to allow action to be taken to prevent lockup between the power driven tool 10 and the workpiece. This will vary depending on the motor used, the total inertia of the power tool and the normal operating speed of the tool, but this may be readily established by routine tests for any given power tool. Moreover, the threshold value need not be a preset value but may vary with operating conditions such as speed of the tool.

It is important to note here that while it is desirable to detect a kickback condition in a relatively short period of time, the principle criteria is to detect the kickback condition and take some action such as turning off the power and/or applying the brake 40 in a period of time which is shorter than the period of time it takes for actual lockup of the power driven tool 10 or other implement with the workpiece. With wood as a workpiece, lockup may take place in as short a period of time as 10 milliseconds or as long a period of time as 200 milliseconds or more. Therefore, it is generally sufficient to specify that detection of the kickback condition plus action time to prevent kickback be made in a period of time of less than 10 milliseconds.

In a typical implementation, the time it takes to detect a kickback condition can be varied by adjusting the level of a threshold voltage signal. By making the level relatively small, a kickback condition can be detected in a relatively short period of time, but, in addition, there will be a number of false detections which is not desirable. In practical implementations of the disclosure, this has not been a problem because the threshold level can be set sufficiently high as to avoid false detections and yet detect a kickback condition in a sufficiently short period of time to allow some action to be taken to prevent the kickback.

According to the present teachings, the kickback control switch 34 has two or more settings in which an operator can selectively adjust the sensitivity of the detection of a kickback event. The exemplary switch 34 has three settings, A, B and C however, two or more settings may be provided. The switch 34 may be a slidable switch, as illustrated, having two or more positive nesting positions along a track 48. Other switches, such as a multi-pole selector switch, a potentiometer, a dial or knob, may similarly be employed for allowing a user to select among two or a plurality of positions (thresholds). In this way, movement of the switch 34 can communicate various signals to a printed circuit board (PCB) 50 and/or the anti-kickback control device 32. The signals can correspond to various threshold values indicative of a kickback condition. In one example, the thresholds can correspond to various rates of current change. As a result, a user can set a desired sensitivity of anti-kickback control for a given task, such as a "high" setting corresponding to sensitive detection of a kickback event or a "low" setting corresponding to less sensitive detection of a kickback event. In another example, the switch 34 may additionally include an "OFF" setting. In the "OFF" setting, anti-kickback control can be turned off entirely. A second position can correspond to an "ON" setting. In the "ON" setting, anti-kickback control can be turned on.

With reference to FIGS. 1 and 2, the tool 10 may also include a visual indicator 54. The visual indicator 54 may comprise an LED 58 that is in electrical communication with the PCB 50 and/or the anti-kickback control device 32. The anti-kickback control device 32 can control the illumination of the LED 58 based on the detection of a kickback event. In this way, the output of the anti-kickback control device 32 for illuminating the LED 58 can be a function of the rotational speed (RPM) of the electric motor 38. As can be appreciated, illumination of the LED 58 can communicate to a user that a kickback condition has occurred in the tool 10. In this way, illumination of the LED 58 is not the result of a tool malfunctioning, but rather an indication to the user that a kickback condition has occurred.

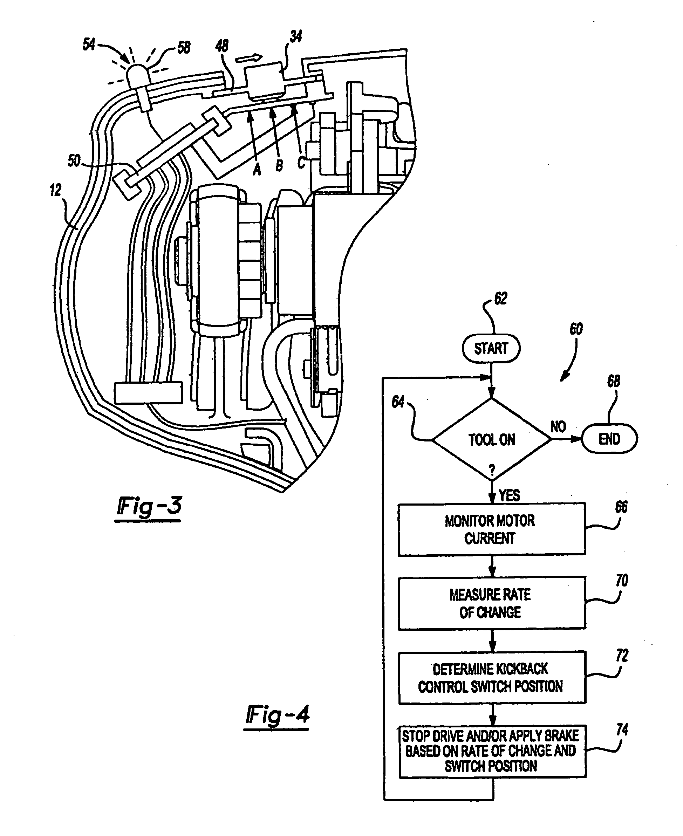

With reference now to FIG. 4, an exemplary method of operating the tool 10 is shown and generally identified at reference 60. Control begins in step 62. In step 64, control determines if the power tool 10 is on. If the power tool 10 is on, the motor current is monitored, such as by the kickback sensor 30 in step 66. If the power tool 10 is not on, control ends in step 68. In step 70, the rate of change of the motor current is measured, such as by the anti-kickback control device 32 based on an output from the kickback sensor 30. In step 72, control determines a position of the kickback control switch 34. In step 74, the motor 38 is stopped and/or the brake 40 is applied based on the rate of change determined by the anti-kickback control device 32 and the position of the kickback control switch 34. Control then loops to step 64.

While the invention has been described in the specification and illustrated in the drawings with reference to various embodiments, it will be understood by those skilled in the art that various changes may be made and equivalents may be substituted for elements thereof without departing from the scope of the invention as defined in the claims.

Therefore, it is intended that the invention not be limited to the particular embodiment illustrated by the drawings and described in the specification as the best mode presently contemplated for carrying out this invention, but that the invention will include any embodiments falling within the scope of appended claims.

## Claims

1. A power tool (10) comprising:
a housing (12); and
a motor assembly (14) in the housing, the motor assembly including an output member (20) and a motor (38) for translating the output member
comprising
a kickback sensor (30) that senses an operational rate of change of one of the motor and output member and produces an output in response thereto;
an anti-kickback control device (32) that removes energy from the output member in response to the output of the kickback sensor; **characterized in that** the power tool comprises
a switch for selectively adjusting the sensitivity of a detection of a kickback event, the switch (34) having at least a first sensitivity setting and a second sensitivity setting, the first sensitivity setting corresponding to the anti-kickback control device removing energy in response to the output of the kickback sensor being above a first threshold value and the second sensitivity setting corresponding to the anti-kickback control device removing energy in response to the output of the kickback sensor being above a second threshold value.

2. The power tool (10) of claim 1, wherein the kickback sensor (30) samples successive periods of current through said motor (38).

3. The power tool (10) of claim 1, further comprising a visual indicator (54), wherein the anti-kickback control device (32) communicates a signal to the visual indicator based on the output of the kickback sensor (30).

4. A power tool (10) as claimed in claim 1,2 or 3 comprising :
an anti-kickback control device (32) that stops the motor in response to the output of the kickback sensor; and
a visual indicator (54), wherein the anti-kickback control device communicates a signal to the visual indicator based on the output of the kickback sensor.

5. The power tool (10) of either one of claims 1 or 4, wherein the
anti-kickback control device (32) includes an "OFF" setting wherein the anti-kickback control device is turned off.

6. The power tool (10) of either one of claims 2 or 4, wherein the first sensitivity setting
includes a first threshold corresponding to a first rate of current change and the second sensitivity setting includes a second threshold corresponding to a second rate of current change.

7. The power tool (10) of either one of claims 1 or 4, wherein the switch (34) comprises a slidable switch configured on an upper portion (48) of the housing.

8. The power tool (10) of either one of claims 1 or 4, further comprising a reset switch (44) in electrical communication with the anti-kickback control device (32), the reset switch operable to restart the power tool (10) subsequent to a kickback condition being cleared.

9. The power tool of either one of claims 1 or 4, wherein the switch (34) has a third setting corresponding to a third threshold and a third rate of current change.

10. A method (60) of eliminating kickback in a power tool (10) of the type having an output spindle (20) driven by an electric motor (38), the electric motor being supplied with current from an AC source (28), the method comprising:
sampling successive periods of current through the motor (66);
determining a rate of change of the current in response to the sampling (70) and;
comparing the rate of change to a kickback threshold **characterized in that**;
determining a selected position (72) of a switch for selectively adjusting the sensitivity of a detection of a kickback event (34) having at least a first sensitivity setting and a second sensitivity setting wherein the kickback threshold is at a first value for the first sensitivity setting and at a second value for the second sensitivity setting; and
removing energy from the output spindle in response to the comparison when the rate of change exceeds the kickback threshold.

11. The method (60) of claim 10, wherein removing the energy includes inhibiting the supply of current to the motor (38) if the rate of change exceeds the threshold.

12. The method (60) of claim 10, wherein removing the energy includes applying a brake (40) to the motor (38) if the rate of change exceeds the threshold.

13. The method (60) of claim 10, further comprising:
illuminating a light source (54,58) based on the rate of change comparison.

14. The method (60) of claim 10 wherein determining the position of the user actuated switch (34) includes assigning a first threshold to the first position and a second threshold to the second position, the first and second thresholds corresponding to different rates of current change.

## Patentansprüche

1. Elektrowerkzeug (10), Folgendes umfassend:
ein Gehäuse (12) und
eine Motoranordnung (14) in dem Gehäuse, wobei die Motoranordnung ein Ausgabeelement (20) und einen Motor (38) zum Antreiben des Ausgabeelements mittels Übersetzung beinhaltet und Folgendes umfasst:
einen Rückschlagsensor (30), der eine Betriebsänderungsrate von entweder dem Motor oder dem Ausgabeelement abtastet und in Reaktion darauf eine Ausgabe erzeugt,
eine Anti-Rückschlag-Steuervorrichtung (32), die in Reaktion auf die Ausgabe des Rückschlagsensors Energie vom Ausgabeelement abzieht,
**dadurch gekennzeichnet, dass** das Elektrowerkzeug Folgendes umfasst:
einen Schalter zum wahlweisen Einstellen der Empfindlichkeit für eine Erkennung eines Rückschlagereignisses, wobei der Schalter (34) mindestens eine erste Empfindlichkeitseinstellung und eine zweite Empfindlichkeitseinstellung aufweist, wobei die erste Empfindlichkeitseinstellung dem Abzug von Energie durch die Anti-Rückschlag-Steuervorrichtung in Reaktion darauf entspricht, dass die Ausgabe des Rückschlagsensors über einem ersten Grenzwert liegt, und die zweite Empfindlichkeitseinstellung dem Abzug von Energie durch die Anti-Rückschlag-Steuervorrichtung in Reaktion darauf entspricht, dass die Ausgabe des Rückschlagsensors über einem zweiten Grenzwert liegt.

2. Elektrowerkzeug (10) nach Anspruch 1, wobei der Rückschlagsensor (30) aufeinanderfolgende Perioden von Stromfluss durch den Motor (38) abtastet.

3. Elektrowerkzeug (10) nach Anspruch 1, ferner eine Sichtanzeige (54) umfassend, wobei die Anti-Rückschlag-Steuervorrichtung (32) basierend auf der Ausgabe des Rückschlagsensors (30) ein Signal an die Sichtanzeige überträgt.

4. Elektrowerkzeug (10) nach Anspruch 1, 2 oder 3, Folgendes umfassend:
eine Anti-Rückschlag-Steuervorrichtung (32), die in Reaktion auf die Ausgabe des Rückschlagsensors den Motor anhält, und
eine Sichtanzeige (54), wobei die Anti-Rückschlag-Steuervorrichtung basierend auf der Ausgabe des Rückschlagsensors ein Signal an die Sichtanzeige überträgt.

5. Elektrowerkzeug (10) nach einem der Ansprüche 1 oder 4, wobei die Anti-Rückschlag-Steuervorrichtung (32) eine Einstellung "AUS" beinhaltet, bei der die Anti-Rückschlag-Steuervorrichtung ausgeschaltet ist.

6. Elektrowerkzeug (10) nach einem der Ansprüche 2 oder 4, wobei die erste Empfindlichkeitseinstellung einen ersten Grenzwert beinhaltet, der einer ersten Stromänderungsrate entspricht, und die zweite Empfindlichkeitseinstellung einen zweiten Grenzwert beinhaltet, der einer zweiten Stromänderungsrate entspricht.

7. Elektrowerkzeug (10) nach einem der Ansprüche 1 oder 4, wobei der Schalter (34) einen Schiebeschalter umfasst, der an einem oberen Abschnitt (48) des Gehäuses angebracht ist.

8. Elektrowerkzeug (10) nach einem der Ansprüche 1 oder 4, ferner einen Rückstellschalter (44) in elektrischer Verbindung mit der Anti-Rückschlag-Steuervorrichtung (32) umfassend, wobei der Rückstellschalter funktionsfähig ist, das Elektrowerkzeug (10) wieder anzulassen, nachdem ein Rückschlagzustand beendet wurde.

9. Elektrowerkzeug nach einem der Ansprüche 1 oder 4, wobei der Schalter (34) eine dritte Einstellung aufweist, die einem dritten Grenzwert und einer dritten Stromänderungsrate entspricht.

10. Verfahren (60) zum Unterbinden von Rückschlag in einem Elektrowerkzeug (10) der Art, die eine Ausgabespindel (20) umfasst, die durch einen Elektromotor (38) angetrieben wird, wobei der Elektromotor mit Strom von einer Wechselstromquelle (28) versorgt wird, wobei das Verfahren Folgendes umfasst:
Abtasten (66) aufeinanderfolgender Perioden von Stromfluss durch den Motor,
Bestimmen (70) einer Stromänderungsrate in Reaktion auf das Abtasten
und
Vergleichen der Änderungsrate mit einem Rückschlaggrenzwert, **gekennzeichnet durch**
Bestimmen einer ausgewählten Position (72) eines Schalters, um die Empfindlichkeit für eine Erkennung eines Rückschlagereignisses (34) wahlweise einzustellen, die mindestens eine erste Empfindlichkeitseinstellung und eine zweite Empfindlichkeitseinstellung aufweist, wobei der Rückschlaggrenzwert für die erste Empfindlichkeitseinstellung bei einem ersten Wert liegt und für die zweite Empfindlichkeitseinstellung bei einem zweiten Wert, und
Abziehen von Energie aus der Ausgabespindel in Reaktion auf den Vergleich, wenn die Änderungsrate den Rückschlaggrenzwert übersteigt.

11. Verfahren (60) nach Anspruch 10, wobei das Abziehen von Energie das Verhindern der Stromzufuhr zum Motor (38) beinhaltet, wenn die Änderungsrate den Grenzwert übersteigt.

12. Verfahren (60) nach Anspruch 10, wobei das Abziehen von Energie das Anlegen einer Bremse (40) an den Motor (38) beinhaltet, wenn die Änderungsrate den Grenzwert übersteigt.

13. Verfahren (60) nach Anspruch 10, ferner Folgendes umfassend:
Entzünden einer Lichtquelle (54, 58), basierend auf dem Vergleich der Änderungsraten.

14. Verfahren (60) nach Anspruch 10, wobei das Bestimmen der Position des vom Benutzer betätigten Schalters (34) das Zuweisen eines ersten Grenzwertes zur ersten Position und eines zweiten Grenzwertes zur zweiten Position beinhaltet, wobei der erste und der zweite Grenzwert unterschiedlichen Stromänderungsraten entsprechen.

## Revendications

1. Outil électrique (10) comprenant :
un boîtier (12) ; et
un ensemble motorisé (14) dans le boîtier, l'ensemble motorisé comprenant un élément de sortie (20) et un moteur (38) pour appliquer un mouvement de translation à l'élément de sortie, comprenant :
un capteur de recul (30) qui capte un taux opérationnel de changement du moteur ou de l'élément de sortie et produit une sortie en réponse ;
un dispositif de commande anti-recul (32) qui élimine de l'énergie de l'élément de sortie en réponse à la sortie du capteur de recul ;
**caractérisé en ce que** l'outil électrique comprend :
un commutateur permettant de régler sélectivement la sensibilité de détection d'un événement de recul, le commutateur (34) ayant au moins un premier réglage de sensibilité et un second réglage de sensibilité, le premier réglage de sensibilité correspondant au dispositif de commande anti-recul qui élimine de l'énergie en réponse à la sortie du capteur de recul lorsqu'elle se trouve au-dessus d'une première valeur de seuil et le second réglage de sensibilité correspondant au dispositif de commande anti-recul éliminant de l'énergie en réponse à la sortie du capteur de recul lorsqu'elle se trouve au-dessus d'une seconde valeur de seuil.

2. Outil électrique (10) selon la revendication 1, dans lequel le capteur de recul (30) échantillonne des périodes successives de courant passant à travers ledit moteur (38).

3. Outil électrique (10) selon la revendication 1, comprenant en outre un indicateur visuel (54), dans lequel le dispositif de commande anti-recul (32) communique un signal à l'indicateur visuel sur la base de la sortie du capteur de recul (30).

4. Outil électrique (10) selon les revendications 1, 2 ou 3, comprenant :
un dispositif de commande anti-recul (32) qui arrête le moteur en réponse à la sortie du capteur de recul ; et
un indicateur visuel (54), dans lequel le dispositif de commande anti-recul communique un signal à l'indicateur visuel sur la base de la sortie du capteur de recul.

5. Outil électrique (10) selon l'une quelconque des revendications 1 ou 4, dans lequel le dispositif de commande anti-recul (32) comprend un réglage "ARRET", dans lequel le dispositif de commande anti-recul est déconnecté.

6. Outil électrique (10) selon l'une quelconque des revendications 2 ou 4, dans lequel le premier réglage de sensibilité comprend un premier seuil correspondant à un premier taux de changement de courant et le second réglage de sensibilité comprend un second seuil correspondant à un second taux de changement de courant.

7. Outil électrique (10) selon l'une quelconque des revendications 1 ou 4, dans lequel le commutateur (34) comprend un commutateur coulissant configuré sur une partie supérieure (48) du boîtier.

8. Outil électrique (10) selon l'une quelconque des revendications 1 ou 4, comprenant en outre un commutateur de remise à zéro (44) en communication électrique avec le dispositif de commande anti-recul (32), le commutateur de remise à zéro étant à même de redémarrer l'outil électrique (10) après y avoir supprimé un état de recul.

9. Outil électrique selon l'une quelconque des revendications 1 ou 4, dans lequel le commutateur (34) a un troisième réglage correspondant à un troisième seuil et à un troisième taux de changement de courant.

10. Procédé (60) d'élimination d'un recul dans un outil électrique (10) du type ayant une broche de sortie (20) entraînée par un moteur électrique (38), le moteur électrique étant alimenté en courant provenant d'une source alternative CA (28), le procédé comprenant les étapes consistant à :
échantillonner des périodes successives de courant passant à travers le moteur (66) ;
déterminer un taux de changement du courant en réponse à l'échantillonnage (70) ; et
comparer le taux de changement à un seuil de recul, **caractérisé en ce que** :
l'on détermine une position choisie (72) d'un commutateur pour ajuster sélectivement la sensibilité de détection d'un événement de recul (34) ayant au moins un premier réglage de sensibilité et un second réglage de sensibilité, le seuil de recul se trouvant à une première valeur pour le premier réglage de sensibilité et à une seconde valeur pour le deuxième réglage de sensibilité ; et
on élimine l'énergie de la broche de sortie en réponse à la comparaison lorsque le taux de changement dépasse le seuil de recul.

11. Procédé (60) selon la revendication 10, dans lequel l'élimination de l'énergie comprend l'arrêt de l'alimentation en courant du moteur (38) si le taux de changement dépasse le seuil.

12. Procédé (60) selon la revendication 10, dans lequel l'élimination de l'énergie comprend l'application d'un frein (40) au moteur (38) si le taux de changement dépasse le seuil.

13. Procédé (60) selon la revendication 10, comprenant en outre :
l'éclairage d'une source de lumière (54, 58) sur la base de la comparaison du taux de changement.

14. Procédé (60) selon la revendication 10, dans lequel la détermination de la position du commutateur (34) actionné par l'utilisateur comprend l'affectation d'un premier seuil à la première position et d'un second seuil à la seconde position, les premier et second seuils correspondant à différents taux de changement de courant.
